# EUROPEAN PATENT APPLICATION

(11) **EP 4 145 742 A1**
(43) Date of publication of application: **08.03.2023**
(21) Application number: 21796538.3
(22) Date of filing: 25.04.2021
(51) Int. Cl.: H04L 5/00, H04W 72/04

(54) **DOWNLINK RECEPTION TRIGGERING METHOD, TERMINAL AND NETWORK SIDE DEVICE**

(30) Priority: 30.04.2020 CN 202010367082
(71) Applicant: Vivo Mobile Communication Co., Ltd., Dongguan, Guangdong 523863 (CN)
(72) Inventor: LI, Dongru, Dongguan, Guangdong 523863 (CN); WU, Yumin, Dongguan, Guangdong 523863 (CN); PAN, Xueming, Dongguan, Guangdong 523863 (CN); SUN, Xiaodong, Dongguan, Guangdong 523863 (CN); CHEN, Xiaohang, Dongguan, Guangdong 523863 (CN)
(74) Representative: Lavoix
(86) International application number: PCT/CN2021/089550
(87) International publication number: WO 2021/218842

(57) **Abstract**

A downlink reception triggering method, a terminal, and a network-side device are provided. A method on a terminal side includes transmitting a first uplink signal, where the first uplink signal is used to trigger a first downlink reception.

## Description

### CROSS-REFERENCE TO RELATED APPLICATIONS

This application claims priority to Chinese Patent Application No. 202010367082.9, filed in China on April 30, 2020, which is incorporated herein by reference in its entirety.

### TECHNICAL FIELD

The present invention relates to the field of communications technologies, and in particular, to a downlink reception triggering method, a terminal, and a network-side device.

### BACKGROUND

In mobile communications systems, a conventional transmission method is based on scheduling. For example, a terminal first monitors physical downlink control channel (Physical Downlink Control Channel, PDCCH) for time-frequency resources for downlink reception allocated by a network-side device for the terminal, and then performs downlink reception on the corresponding resources.

In practical application scenarios, the scheduling-based transmission method is not necessarily the most efficient. Extended reality (Extended reality, XR) is used as an example. XR refers to real-and-virtual combined environments and human-machine interactions generated by computer technology and wearable devices. In XR application scenarios, data resources required by a user can be predicted based on actions of the user. However, a terminal has poor flexibility and low efficiency in downlink reception based on dynamic scheduling by a network-side device, which cannot satisfactorily meet service requirements of the XR terminal and fit XR service models.

### SUMMARY

Embodiments of the present invention provide a downlink reception triggering method, a terminal, and a network-side device, to resolve a problem in the prior art that a terminal has poor flexibility and low efficiency in downlink reception based on dynamic scheduling by a network-side device.

To resolve the foregoing problem, the present invention is implemented as follows.

According to a first aspect, an embodiment of the present invention provides a downlink reception triggering method, applied to a terminal device, where the method includes:
transmitting a first uplink signal, where the first uplink signal is used to trigger a first downlink reception.

According to a second aspect, an embodiment of the present invention provides a downlink reception triggering method, applied to a network-side device, where the method includes:
receiving a first uplink signal from a terminal, where the first uplink signal is used to trigger a first downlink reception.

According to a third aspect, an embodiment of the present invention provides a terminal, including:
a transmitting module, configured to transmit a first uplink signal, where the first uplink signal is used to trigger a first downlink reception.

According to a fourth aspect, an embodiment of the present invention provides a network-side device, including:
a receiving module, configured to receive a first uplink signal from a terminal, where the first uplink signal is used to trigger a first downlink reception.

According to a fifth aspect, an embodiment of the present invention provides a terminal, including a memory, a processor, and an instruction or program stored in the memory and capable of running on the processor, where when the instruction or program is executed by the processor, the steps of the downlink reception triggering method provided in the first aspect of the embodiments of the present invention are implemented.

According to a sixth aspect, an embodiment of the present invention provides a network-side device, including a memory, a processor, and an instruction or program stored in the memory and capable of running on the processor, where when the instruction or program is executed by the processor, the steps of the downlink reception triggering method provided in the second aspect of the embodiments of the present invention are implemented.

According to a seventh aspect, an embodiment of the present invention provides a readable storage medium, where the readable storage medium stores an instruction or program, where when the instruction or program is executed by a processor, the steps of the downlink reception triggering method provided in the first aspect of the embodiments of the present invention are implemented.

According to an eighth aspect, an embodiment of the present invention provides a readable storage medium, where the readable storage medium stores an instruction or program, where when the instruction or program is executed by a processor, the steps of the downlink reception triggering method provided in the second aspect of the embodiments of the present invention are implemented.

According to a ninth aspect, an embodiment of the present invention provides a chip, where the chip includes a processor and a communications interface, the communications interface is coupled to the processor, and the processor is configured to run a program or instruction to implement the downlink reception triggering method according to the first aspect.

According to a tenth aspect, an embodiment of the present invention provides a chip, where the chip includes a processor and a communications interface, the communications interface is coupled to the processor, and the processor is configured to run a program or instruction to implement the downlink reception triggering method according to the second aspect.

According to an eleventh aspect, an embodiment of the present invention provides a computer program product, stored in a readable storage medium, where the computer program product is executed by at least one processor to implement the steps of the downlink reception triggering method according to the first aspect or the steps of the downlink reception triggering method according to the second aspect.

According to a twelfth aspect, an embodiment of the present invention provides a terminal, where the terminal is configured to perform the downlink reception triggering method according to the first aspect.

According to a thirteenth aspect, an embodiment of the present invention provides a network-side device, where the network device is configured to perform the downlink reception triggering method according to the second aspect.

In the embodiments of the present invention, the terminal may transmit an uplink signal to trigger a corresponding downlink reception, which can not only reduce resource consumption by the terminal, helping the terminal save energy, but also improve flexibility and efficiency of the terminal in downlink reception. The embodiments of the present invention are applicable but not limited to XR application scenarios. When applied to an XR application scenario, the embodiments of the present invention can better meet service requirements of an XR terminal and requirements of an XR user.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a structural diagram of a network system according to an embodiment of the present invention;
FIG. 2 is a schematic diagram of a DRX cycle according to an embodiment of the present invention;
FIG. 3 is a flowchart of a downlink reception triggering method according to an embodiment of the present invention;
FIG. 4 to FIG. 9 are example diagrams according to embodiments of the present invention;
FIG. 10 is a flowchart of another downlink reception triggering method according to an embodiment of the present invention;
FIG. 11 is a schematic structural diagram of a terminal according to an embodiment of the present invention;
FIG. 12 is a schematic structural diagram of a network-side device according to an embodiment of the present invention;
FIG. 13 is a schematic diagram of a hardware structure of a terminal according to an embodiment of the present invention; and
FIG. 14 is a schematic diagram of a hardware structure of a network-side device according to an embodiment of the present invention.

### DETAILED DESCRIPTION

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

In the specification and claims of this application, the term "include" and any other variants mean to cover a non-exclusive inclusion. For example, a process, method, system, product, or device that includes a list of steps or units is not necessarily limited to those steps or units, but may include other steps or units not expressly listed or inherent to such a process, method, product, or device. In addition, in the specification and claims, the use of "and/or" represents presence of at least one of the connected objects, for example, "A and/or B" indicates the following three cases: only A, only B, or both A and B.

In the embodiments of the present invention, the terms such as "an example" or "for example" are used to represent giving an example, an instance, or an illustration. Any embodiment or design solution described as "an example" or "for example" in the embodiments of the present invention shall not be interpreted to be more preferential or advantageous than other embodiments or design solutions. To be precise, the terms such as "an example" or "for example" are intended to present a related concept in a specific manner.

The following describes the embodiments of the present invention with reference to the accompanying drawings. The embodiments provided in the present invention may be applied to a wireless communications system. The wireless communications system may be a 5G system, or an evolved long term evolution (Evolved Long Term Evolution, eLTE) system, or a later evolved communications system.

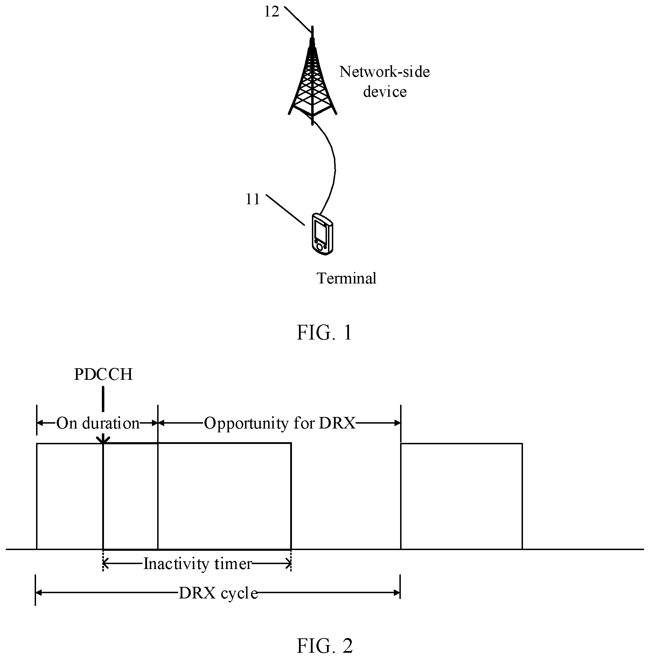

FIG. 1 is a structural diagram of a network system according to an embodiment of the present invention. As shown in FIG. 1, the network system includes a terminal 11 and a network-side device 12. The terminal 11 may be a mobile communications device, for example, a mobile phone, a tablet personal computer (Tablet Personal Computer), a laptop computer (Laptop Computer), a personal digital assistant (personal digital assistant, PDA for short), a mobile Internet device (Mobile Internet Device, MID), or a wearable device (Wearable Device). It should be noted that the terminal 11 is not limited to a specific type in the embodiments of the present invention. The network-side device 12 may be a 5G network-side device (for example, a gNB or a 5G NR NB), a 4G network-side device (for example, an eNB), a 3G network-side device (for example, an NB), a network-side device in a later evolved communications system, or the like. It should be noted that the network-side device 12 is not limited to a specific type in the embodiments of the present invention.

To better understand the technical solutions in the embodiments of the present invention, technologies related to the embodiments of the present invention are briefly described before describing the technical solutions in the embodiments of the present invention.

### I. XR service

XR refers to all real-and-virtual combined environments and human-machine interactions generated by computer technology and wearable devices. It includes representative forms such as augmented reality (Augmented Reality, AR), mediated reality (Mediated Reality, MR) and virtual reality (Virtual Reality, VR) and areas interpolated among them. Levels of virtuality range from partially sensory inputs to immersive virtuality. One key aspect of XR is extension of human experiences especially relating to the senses of existence (represented by VR) and the acquisition of cognition (represented by AR).

In an XR application scenario, a user in a virtual reality experience can obtain information about new angle of view through head turning or another action. In this case, the action of turning head of the XR user may be informed to a network-side device by a terminal by transmitting an uplink signal. After receiving the uplink signal, the network-side device may schedule required downlink data for use by the XR user.

For an XR (not excluding NR light) application scenario, there may be a procedure of triggering a downlink reception by an uplink signal. In the prior art, such a mechanism for triggering a downlink reception by an uplink signal has not yet been supported. Therefore, a terminal has relatively large resource consumption, and has poor flexibility in downlink reception, unable to satisfactorily meet service requirements of an XR terminal and service requirements of an XR user.

### II. CDRX (radio resource control (Radio Resource Control, RRC) connected state discontinuous reception (Discontinuous Reception, DRX))

As shown in FIG. 2, a DRX cycle consists of "On Duration (on duration)" and "Opportunity for DRX (opportunity for DRX)". During "On Duration", a terminal monitors and receives PDCCH, and during "Opportunity for DRX", the terminal skips monitoring PDCCH for reducing power consumption. If a newly transmitted PDCCH is received within the on duration, an inactivity timer (inactivity timer) is started or restarted to extend a duration in which the terminal monitors PDCCH.

It should be noted that the "timer" in this application can also be referred to as a "timing device", which means that the "timer" in this application is the same as or similar to the "timing device" in meaning.

A system may configure a short DRX cycle (short DRX cycle) or a long DRX cycle (long DRX cycle) for a terminal based on different service scenarios. If both the short cycle and the long cycle are configured, switching between the long and short cycles can be performed in some way.

In view of this, an embodiment of the present invention provides a method for triggering a downlink reception by an uplink signal, that is, the downlink reception triggering method provided in an embodiment of the present invention.

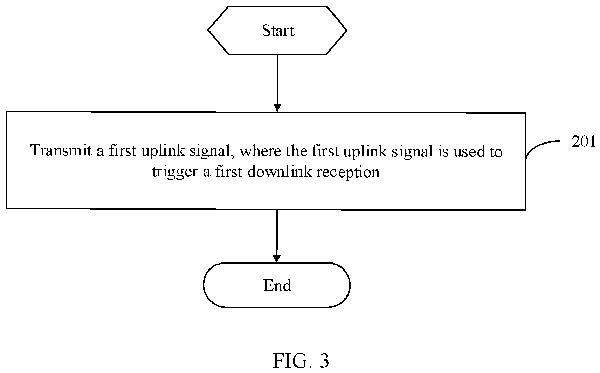

FIG. 3 is a flowchart of a downlink reception triggering method according to an embodiment of the present invention. As shown in FIG. 3, the downlink reception triggering method is applied to a terminal, and the method includes the following step:
Step 201: Transmit a first uplink signal, where the first uplink signal is used to trigger a first downlink reception.

In this embodiment of the present invention, the terminal may transmit a first uplink signal to directly trigger a first downlink reception, and need no procedure such as configuring the first downlink reception by a network-side device. Therefore, the first downlink reception is triggered by transmitting the first uplink signal, which is different from existing downlink scheduling and downlink reception methods.

The first downlink reception is triggered by transmitting the first uplink signal, which is different from existing scheduling-based transmission methods of triggering a downlink reception. In the existing scheduling-based transmission methods, for example, a terminal monitors PDCCH for time-frequency resources for downlink reception allocated by a network-side device for the terminal, and then the terminal performs downlink reception on the corresponding resources. In this embodiment of the present invention, the terminal transmits the first uplink signal to trigger the first downlink reception. A time-frequency resource for the first downlink reception and a configuration parameter such as a duration of the first downlink reception may be configured in advance by a network-side device or carried in the first uplink signal, so that the downlink reception can be triggered without a scheduling procedure. Therefore, transmitting the first uplink signal to trigger the first downlink reception can improve flexibility and efficiency in downlink reception.

That the first uplink signal is used to trigger a first downlink reception may be understood as follows: There is an association relationship between the first uplink signal and the first downlink reception. After transmitting the first uplink signal, the terminal can monitor or receive the first downlink reception based on the association relationship between the first uplink signal and the first downlink reception.

The association relationship between the first uplink signal and the first downlink reception for example may be an association relationship with respect to a resource configuration parameter. Here, the resource configuration parameter may be, for example, a time-domain configuration parameter, a frequency-domain configuration parameter, or a time-frequency configuration parameter.

In one embodiment, the first downlink reception is explicitly configured by using the resource parameter carried in the first uplink signal. A network-side device transmits the first downlink reception based on the configuration parameter indicated in the received first uplink signal. For example, after transmitting the first uplink signal, the terminal monitors the first downlink reception in a discontinuous reception mode. In addition, the first downlink reception may include a plurality of downlink receptions. In other words, a resource configuration parameter corresponding to the first downlink reception is different from a downlink reception resource configuration parameter configured by the network-side device based on the uplink signal such as a RACH or BFR transmitted by the terminal.

The association relationship between the first uplink signal and the first downlink reception may be established in advance. For example, the association relationship between the first uplink signal and the first downlink reception may be configured by the network-side device in advance, or may be prescribed by a protocol in advance.

In a case that the association relationship between the first uplink signal and the first downlink reception has been pre-established, that the first uplink signal is used to trigger a first downlink reception may be understood as follows: The first uplink signal is used to activate the first downlink reception that has the association relationship with the first uplink signal, and more specifically, the first uplink signal is used to activate the first downlink reception having a corresponding resource configuration parameter.

The first downlink reception may include one or more (including two) downlink receptions. When the first downlink reception includes a plurality of downlink receptions, each downlink reception may correspond to one downlink reception type. When the first downlink reception includes one downlink reception, the downlink reception may correspond to one downlink reception type, or may not correspond to a specific type.

The first downlink reception may include at least one of downlink scheduling information reception, downlink signal reception, downlink data information reception, and downlink channel monitoring.

In other words, the type of the first downlink reception may include at least one of downlink scheduling information, downlink signal, downlink data transmission information, and downlink channel monitoring. The downlink scheduling information may be, for example, a PDCCH, and downlink control information (Downlink Control Information, DCI) in the PDCCH may be scrambled by a specific radio network temporary identifier (RNTI), such as a cell radio network temporary identifier (Cell Radio Network Temporary Identifier, C-RNT) or a configured scheduling RNTI (Configured Scheduling RNTI, CS-RNTI). A DCI format of the PDCCH may be, for example, DCI 1-1, DCI 0-1, DCI 0-0, DCI 1-0, DCI 1-2, or DCI 0-2. The downlink signal may be, for example, a channel state information reference signal (Channel State Information Reference Signal, CSI-RS), a CSI interference measurement (CSI Interference Measurement, CSI-IM), a time reference signal (Time Reference Signals, TRS), and a phase-tracking reference signal (Phase-tracking reference signal, PTRS), a positioning reference signal (Positioning Reference Signals, PRS), or a synchronization signal and PBCH block (Synchronization Signal and PBCH block, SSB). The downlink data transmission information may be, for example, semi-persistent scheduling (Semi-Persistent Scheduling, SPS) physical downlink shared channel (Physical Downlink Shared Channel, PDSCH) reception. The downlink channel monitoring may be, for example, for non-scheduled PDCCH or group common PDCCH (group common PDCCH). Other downlink channels or downlink signals are not excluded.

A type of the first uplink signal may include at least one of an uplink channel type and a type of signaling or signal carried on uplink channel. The uplink channel type may be physical uplink control channel (Physical Uplink Control Channel, PUCCH), PUSCH (for example, PUSCH with a configured uplink grant Configured Grant), or physical random access channel (Physical Random Access Channel, PRACH) (for example, Msg1, MsgA PRACH, MsgA PUSCH, and Msg3). Periodicity of the uplink channel may be periodic, aperiodic, or semi-persistent. The type of signaling or signal carried on uplink channel may be uplink control information (Uplink Control Information, UCI), scheduling request (scheduling request, SR), channel state information (Channel State Information, CSI), hybrid automatic repeat request (Hybrid Automatic Repeat reQuest, HARQ), media access control (Media Access Control, MAC) CE, channel sounding reference signal (Sounding Reference Signal, SRS), or the like. Other uplink channels or uplink signals are not excluded.

Optionally, there is a time-domain association relationship between the first uplink signal and the first downlink reception.

In other words, when the association relationship between the first uplink signal and the first downlink reception may include the time-domain association relationship between the first uplink signal and the first downlink reception, the terminal may transmit the first uplink signal to trigger the first downlink reception having a corresponding time-domain configuration parameter.

In this embodiment of the present invention, the first downlink reception may be triggered by the first uplink signal in either an implicit indication manner or an explicit indication manner.

The following describes the implicit indication manner.

Optionally, the association relationship between the first uplink signal and the first downlink reception is configured by a network-side device, or prescribed by a protocol.

In a case that the association relationship between the first uplink signal and the first downlink reception includes a time-domain association relationship between the first uplink signal and the first downlink reception, the time-domain association relationship between the first uplink signal and the first downlink reception may be configured by the network-side device, or may be prescribed by a protocol.

Optionally, the method further includes:
triggering, based on at least one of a type of the first uplink signal, a logical channel which the first uplink signal belongs to, and a service priority of the first uplink signal, the first downlink reception associated with the first uplink signal.

In this implementation, different downlink receptions may be associated based on types of different uplink signals, or service types of different uplink signals, or logical channels which different uplink signals belong to.

For example, when a logical channel which an uplink signal belongs to is logical channel 1, the uplink signal is associated with downlink reception 1. To be specific, the uplink signal corresponding to the logical channel 1 may trigger or activate the downlink reception 1. In this way, as long as the terminal transmits a first uplink signal corresponding to the logical channel 1, the downlink reception 1 is implicitly triggered or activated. In this example, the first uplink signal is the uplink signal corresponding to the logical channel 1, and the first downlink reception is the downlink reception 1.

The foregoing is an implementation in which the first downlink reception is triggered by the first uplink signal in an implicit indication manner.

The following describes the explicit indication manner.

Optionally, the first uplink signal includes first indication information, where the first indication information is used to trigger the first downlink reception.

The first indication information may include an identifier of the first downlink reception, or a time-domain configuration parameter of the first downlink reception, or an identifier and a time-domain configuration parameter of the first downlink reception. For example, the terminal may transmit uplink control signaling (for example, MAC CE, or UCI), and the uplink control signaling may explicitly indicate a first downlink reception to be triggered or activated by the uplink control signaling.

The first downlink reception triggered by the first indication information may be configured by a network-side device in advance, or may be prescribed by a protocol in advance. For example, the first downlink reception triggered by the first indication information may be configured by using RRC. The first downlink reception triggered by the first indication information may include one or more downlink receptions, or the first indication information may trigger a plurality of first downlink receptions.

Optionally, the first indication information is used to trigger M first downlink receptions among N downlink receptions, where the N downlink receptions are configured by the network-side device or prescribed by a protocol, and both N and M are integers greater than or equal to 1.

For example, N downlink receptions are configured through RRC. The first uplink signal includes first indication information, and the first indication information is used to trigger or activate M downlink receptions among the N downlink receptions, and the M downlink receptions are the foregoing first downlink reception, or the M downlink receptions are the M first downlink receptions, respectively.

Optionally, if M is greater than 1, the method further includes:
receiving first downlink control information (Downlink Control Information, DCI) after the first uplink signal is transmitted; and
triggering K downlink receptions among the M downlink receptions by using the first DCI, where the first downlink reception includes the K downlink receptions, and K is an integer greater than or equal to 1.

For example, N downlink receptions are configured through RRC. The first uplink signal includes first indication information, and the first indication information is used to trigger or activate M downlink receptions among the N downlink receptions. In downlink reception, the DCI is then received to dynamically trigger or activate the K downlink receptions among the M downlink receptions.

The foregoing is an implementation in which the first downlink reception is triggered by the first uplink signal in an explicit indication manner.

Optionally, a time-domain configuration parameter of the first downlink reception is configured by a network-side device or prescribed by a protocol.

In this embodiment of the present invention, the association relationship between the first uplink signal and the first downlink reception may be configured by the network-side device or prescribed by the protocol. Further, the time-domain association relationship between the first uplink signal and the first downlink reception may be configured by the network-side device or prescribed by the protocol. Still further, the time-domain configuration parameter of the first downlink reception may be configured by the network-side device or prescribed by the protocol.

The following describes related implementations of the time-domain configuration parameter of the first downlink reception.

Optionally, the time-domain configuration parameter of the first downlink reception includes at least one of the following:
time-domain start time of the first downlink reception;
time-domain monitoring method for the first downlink reception;
duration of the first downlink reception; and
first cycle parameter of the first downlink reception, where the first cycle parameter includes at least one of length of a first cycle, on duration length of the first cycle, and start offset of the on duration of the first cycle.

Optionally, the time-domain start time of the first downlink reception is any one of the following:
a reference time, where the reference time is an end time of a time-domain resource in which the first uplink signal is located;
a first time, where the first time is a time that is a first time interval apart from the reference time;
a start time of the 1-st available downlink time-domain resource after the reference time;
a start time of a time-domain resource after expiration of a first timer, where the first timer is started at the reference time;
a start time of the 1-st available downlink time-domain resource after the first time; and
a start time of the 1-st available downlink time-domain resource after expiration of the first timer.

The time-domain start time of the first downlink reception may be an end time of a time-domain resource which the first uplink signal belongs to. To be specific, the terminal may start the first downlink reception immediately after the first uplink signal is transmitted.

The time-domain start time of the first downlink reception may alternatively be a first time. A time interval between the first time and the end time of the time-domain resource which the first uplink signal belongs to is a first time interval. To be specific, the terminal may start the first downlink reception the first time interval after the first uplink signal is transmitted. The first time interval may be configured by a network-side device or prescribed by a protocol. Further, the network-side device may configure a plurality of first time interval parameters, and the terminal may add one indication about the first time interval to the first uplink signal. For example, the first time interval may be equal to a time interval K1 between PDSCH and HARQ-ACK feedback correspond to the PDSCH, and a value set of K1 is configured by the network-side device in advance; or the first time interval may be equal to a time interval between a when a BFRQ (beam failure recovery request) is transmitted and a when a BFRR (beam failure recovery response) is received; or the first time interval may be equal to a time interval between a when a RACH is transmitted and a when an RAR response is received.

The time-domain start time of the first downlink reception may alternatively be a start time of the 1-st available downlink time-domain resource after an end time of a time-domain resource which the first uplink signal belongs to. To be specific, the terminal may start to perform the first downlink reception at a beginning of the 1-st available downlink time-domain resource after the first uplink signal is transmitted. The downlink time-domain resource may be a DL subframe (downlink subframe), a DL slot, a DL slot including a CORESET, or the like.

The time-domain start time of the first downlink reception may alternatively be a start time of a time-domain resource after expiration of a first timer. The first timer is triggered at an end time of a time-domain resource which the first uplink signal belongs to. To be specific, the terminal may trigger the first timer immediately after the first uplink signal is transmitted, and start to perform the first downlink reception after expiration of the first timer.

The time-domain start time of the first downlink reception may alternatively be a start time of the 1-st available downlink time-domain resource after the foregoing first time. To be specific, the terminal may start to perform the first downlink reception in the 1-st available downlink time-domain resource the first time interval after the first uplink signal is transmitted.

The time-domain start time of the first downlink reception may alternatively be a start time of the 1-st available downlink time-domain resource after expiration of the first timer. To be specific, the terminal may trigger the first timer immediately after the first uplink signal is transmitted, and start to perform the first downlink reception in the 1-st available downlink time-domain resource after expiration of the first timer.

For a value of the foregoing first time interval, the terminal may report the value of the first time interval based on a capability, or a protocol may prescribe the value of the first time interval by different subcarrier spacing (subcarrier spacing, SCS), or the terminal may report a first time interval, and the value of the first time interval is not specifically limited.

Furthermore, in addition to the foregoing time-domain start time, the first uplink signal may include position information of the start time (for example, an offset is given), and the time-domain start time of the first downlink reception may be determined based on the start time information.

Optionally, the duration of the first downlink reception includes any one of a first time length and a time length of a second timer.

In this implementation, the duration of the first downlink reception may be represented by the first time length, and the first time length may be configured by the network-side device or prescribed by the protocol. The duration of the first downlink reception may alternatively be represented by the time length of the second timer, and the second timer may be configured by the network-side device or prescribed by the protocol.

Optionally, the time-domain monitoring method for the first downlink reception includes any one of the following:
monitoring the first downlink reception within the duration of the first downlink reception;
monitoring the first downlink reception within an on duration of each first cycle; and
monitoring the first downlink reception within an on duration of each first cycle in the duration of the first downlink reception.

If the duration of the first downlink reception is configured, the terminal may monitor the first downlink reception within the duration of the first downlink reception. In other words, the terminal may continuously perform the first downlink reception within the duration of the first downlink reception. For example, if the duration of the first downlink reception is the first time length, the terminal may monitor the first downlink reception within the first time length. For another example, if the duration of the first downlink reception is the time length of the second timer, the terminal may monitor the first downlink reception within the time length of the second timer. In other words, the terminal may continuously perform the first downlink reception within the time length of the second timer. After the second timer expires, the terminal may withdraw the first downlink reception triggered by the first uplink signal. If the terminal receives downlink scheduling information and/or downlink data transmission information within the time length of the second timer, the terminal may restart the second timer.

The terminal may alternatively monitor the first downlink reception in a discontinuous reception manner, that is, monitor the first downlink reception in a periodic time-domain monitoring method. For example, the terminal may monitor the first downlink reception within an on duration of each first cycle. The first cycle includes the on duration and the off duration, and the terminal needs to receive or monitor the first downlink reception within only the on duration, but does not need to receive or monitor the first downlink reception within the off duration. The discontinuous reception proposed in this embodiment can further save energy for the terminal, and is a preferred time-domain monitoring method for the first downlink reception. The first cycle may be a long DRX cycle or a short DRX cycle. If the first cycle is configured as a DRX cycle, related timers and parameters of the DRX cycle can be further applied to downlink reception, for example, DRX-inactivitytimer (DRX inactivity timer) in DRX cycle.

The above two time domain monitoring methods may alternatively be combined. For example, the terminal may monitor the first downlink reception within an on duration of each first cycle in the duration of the first downlink reception. In this method, if the duration of the first downlink reception is the first time length, the monitoring method is as follows: The terminal may monitor the first downlink reception during the on duration of each first cycle within the first time length of the first downlink reception. If the duration of the first downlink reception is the time length of the second timer, the monitoring method is as follows: The terminal may monitor the first downlink reception during the on duration of each first cycle within a running period of the second timing device of the first downlink reception. Further, after the duration of the first downlink reception elapses, the terminal may no longer adopt the periodic downlink reception.

In addition, a duration configuration for the first downlink reception may alternatively be carried in the first uplink signal.

Optionally, the method further includes:
stopping monitoring the first downlink reception if Q downlink receptions in the first downlink reception are not received within on durations of L consecutive first cycles, where 1≤Q≤L, and both L and Q are integers greater than or equal to 1.

In this implementation, the periodic first downlink reception by a terminal is performed by using a time-domain monitoring method for discontinuous reception. If the terminal has not received downlink scheduling and/or downlink data for on durations of L consecutive cycles, the terminal may exit the first downlink reception. In other words, the terminal may exit the first downlink reception triggered by the first uplink signal.

For example, the terminal monitors the first downlink reception within an on duration of each first cycle. If the terminal has not received any one or more or all downlink receptions of the first downlink reception within on durations of three consecutive first cycles, the terminal stops monitoring the first downlink reception. For another example, the terminal monitors the first downlink reception during the on duration of each first cycle within the duration of the first downlink reception. If the terminal has not received all downlink receptions in the first downlink reception within on durations of three first cycles within the duration of the first downlink reception, the terminal stops monitoring the first downlink reception.

This implementation can save energy for the terminal.

Optionally, the on duration length of the first cycle is indicated by using a bitmap method.

The on duration length of the first cycle may alternatively be indicated by a duration.

For example, "11000" indicates the first cycle, where each bit represents 2 ms, a length of the whole first cycle is 10 ms, the first 2 bits of 1 indicate the on duration length of the first cycle, the length of the on duration is 4 ms, the last 3 bits indicate the off duration of the first cycle, and the length of the off duration is 6 ms.

Optionally, if the first downlink reception includes PDCCH reception, the time-domain configuration parameter of the first downlink reception includes at least one of the following:
PDCCH blind detection parameter;
PDCCH monitoring periodicity;
PDCCH monitoring offset;
PDCCH monitoring duration;
control resource set (control resource set, CORESET);
search space group;
search space;
DCI format;
radio network temporary identity (Radio Network Temporary Identity, RNTI);
time interval between a PDCCH and a physical downlink shared channel (Physical Downlink Shared Channel, PDSCH) scheduled by the PDCCH;
time interval between a PDSCH and hybrid automatic repeat request acknowledgement (Hybrid automatic repeat request acknowledgement, HARQ-ACK) feedback of the PDSCH;
time interval between a PDCCH and a physical uplink shared channel (Physical Uplink Shared Channel, PUSCH) scheduled by the PDCCH;
PDSCH processing delay; and
PUSCH preparation delay.

The PDCCH-related time intervals may include K0, K1, and K2, and K0, K1, and K2 are all measured by slot (slot). K0 is a time interval between a slot in which DCI (or a PDCCH corresponding to the DCI) is located and a slot in which a PDSCH scheduled by the DCI is located, and K2 is a time interval between a slot in which DCI (or a PDCCH corresponding to the DCI) is located and a slot in which a PUSCH scheduled by the DCI is located. For example, K0=0 indicates that the PDCCH and its scheduled PDSCH are in a same slot. K1 is a time interval between a slot in which a PDSCH is located and a slot in which a HARQ-ACK feedback of the PDSCH is located, which indicates an offset measured by slot.

The PDSCH processing delay refers to a time interval between a time when a PDSCH has been received and a time when a HARQ-ACK feedback corresponding to the PDSCH is ready to be transmitted in a case of scheduling the PDSCH by a PDCCH. The PDSCH processing delay is different from K1: K1 determines a slot in which the HARQ-ACK is to be fed back, and the PDSCH processing delay means that after the terminal receives the PDSCH, the terminal needs the additional processing delay before it is ready to feed back the HARQ. In other words, K1 must be greater than or equal to the PDSCH processing delay.

The PUSCH preparation delay means that after receiving a PDCCH, the terminal needs a period of time to prepare for transmission of a PUSCH scheduled by the PDCCH. The PUSCH preparation delay is different from K2: K2 determines a slot in which the PUSCH is to be transmitted, and the PUSCH preparation delay means that after the terminal receives the PDCCH, the terminal needs the additional processing delay before it is ready to transmit the PUSCH. In other words, K2 must be greater than or equal to the PUSCH processing delay.

It should be noted that any one or more or all of the foregoing time-domain configuration parameters of the first downlink reception may be configured by a network side or prescribed by a protocol together with other time-domain configuration parameters. For example: any one or more or all of the foregoing time-domain configuration parameters of the first downlink reception may be configured together with any one or more or all of time-domain start time, time-domain monitoring method, duration, and first cycle parameter of the first downlink reception. In addition, any one or more or all of the foregoing time-domain configuration parameters of the first downlink reception may be carried together with other time-domain configuration parameters in the first uplink signal.

Optionally, the association relationship is configured for at least one of a specified terminal, a specified medium access control (Media Access Control, MAC) entity, a specified service type, and a specified frequency range.

In other words, the mechanism for triggering the first downlink reception by the first uplink signal may be configured for use by a specified terminal, or may be configured for use by a specified MAC entity (such as a MAC entity of an SCG or a MAC entity of an MCG), or may be configured only for a specified service type (such as a specified logical channel (such as logical channel 1)), or may be configured only for a specified frequency range (such as cell 1 or BWP1). The frequency-domain range may be a BWP or a serving cell or a component carrier. In addition, the mechanism for triggering the first downlink reception by the first uplink signal may alternatively be configured for various service types, and association relationships between uplink signals and downlink receptions for the service types mean that relevant configuration parameters of the mechanism for triggering the first downlink reception by the first uplink signal may be the same or different. The mechanism for triggering the first downlink reception by the first uplink signal may alternatively be configured for all BWPs of the terminal, and association relationships between uplink signals of and downlink receptions for the BWPs mean that relevant configuration parameters of the mechanism for triggering the first downlink reception by the first uplink signal may be the same or different.

In this implementation, the mechanism for triggering the first downlink reception by the first uplink signal may be flexibly configured according to specific requirements, which can improve flexibility of the terminal in downlink reception.

Optionally, the method further includes:
receiving a first message from a network-side device, where the first message is used to instruct the terminal to stop receiving at least one downlink reception in the first downlink reception.

In this implementation, the network-side device may configure a mechanism for stopping the first downlink reception triggered by the first uplink signal. For example, the network-side device configures a stop command (such as a MAC CE command or DCI) to stop any one or more or all downlink receptions in the first downlink reception currently being performed by the terminal. After receiving the first message from the network-side device, the terminal may stop receiving any one or more or all downlink receptions in the first downlink according to an indication in the first message.

In this implementation, the terminal can stop the downlink reception triggered by the uplink signal according to the indication from the network-side device, helping to improve working performance and efficiency of a communications system.

Optionally, the method further includes:
receiving a second message from the network-side device, where the second message is used to instruct the terminal to switch a receiving cycle for the first downlink reception from the first cycle to a second cycle; and the second cycle is different from the first cycle in at least one of length, on duration length, and start offset of the on duration.

In this implementation, the network-side device may configure a dual-cycle switching mechanism for the first downlink reception triggered by the first uplink signal, and the dual-cycle switching mechanism is similar to a switching mechanism for short DRX cycle (short DRX cycle) and long DRX cycle (long DRX cycle). For example, the network-side device may issue a switching command (such as a MAC CE command or DCI) to instruct the terminal to switch a discontinuous reception cycle of the first downlink reception.

After receiving the second message from the network-side device, the terminal may switch a cycle for the first downlink reception from the first cycle to the second cycle according to the indication in the second message. This can improve flexibility in the first downlink reception and help to improve performance of a communications system.

Optionally, if the terminal has transmitted a second uplink signal within the duration of the first downlink reception and the second uplink signal is used to trigger a second downlink reception, the method further includes:
performing the first downlink reception and the second downlink reception in parallel; or
performing only the second downlink reception.

In this implementation, if within the duration of the first downlink reception triggered by the first uplink signal (that is, the first downlink reception has not ended), the terminal transmits another uplink signal (that is, the second uplink signal) to trigger the second downlink reception, a time configuration for downlink reception in this case may include any one of the following.

Firstly, the terminal performs downlink receptions triggered by multiple uplink signals in parallel, or in other words, the terminal monitors the first downlink reception and the second downlink reception in parallel. Each uplink signal triggers a monitoring configuration for a downlink reception. For example, uplink signals trigger new timing devices, and the terminal needs to meet a monitoring configuration for a downlink reception triggered by any one of the uplink signals.

Secondly, the terminal performs only a downlink reception triggered by an uplink signal, or in other words, the terminal maintains a monitoring configuration for on a downlink reception. Each time the terminal transmits a new uplink signal, the terminal may stop a currently ongoing downlink reception and start a new downlink reception by using a monitoring configuration for a new downlink reception. Certainly, it is not excluded that the terminal continues a currently ongoing downlink reception each time the terminal transmits a new uplink signal.

Optionally, in a case of performing the first downlink reception and the second downlink reception in parallel, if the first downlink reception and the second downlink reception contend on one or more resources, the method further includes:
on a resource under contention, performing the second downlink reception and dropping the first downlink reception; or
on a resource under contention, performing the first downlink reception and dropping the second downlink reception; or
on a resource under contention, determining, based on at least one of types of the first uplink signal and the second uplink signal, logical channels which the first uplink signal and the second uplink signal belong to, and service priorities of the first uplink signal and the second uplink signal, a to-be-performed downlink reception from the first downlink reception and the second downlink reception.

The resource contention includes at least one of a time-domain resource contention and a frequency-domain resource contention.

This implementation may also be expressed as follows:
in a case of performing the first downlink reception and the second downlink reception in parallel, if the first downlink reception and the second downlink reception contend on one or more resources, the method further includes:
receiving downlink signals in the second downlink reception that contention with the first downlink reception, and abandoning reception of downlink signals in the first downlink reception that contention with the second downlink reception; or
receiving downlink signals in the first downlink reception that contention with the second downlink reception, and abandoning reception of downlink signals in the second downlink reception that contention with the first downlink reception; or
determining, based on at least one of a type of the first uplink signal, a logical channel which the first uplink signal belongs to, and a service priority of the first uplink signal, and at least one of a type of the second uplink signal, a logical channel which the second uplink signal belongs to, and a service priority of the second uplink signal, a to-be-received downlink signal from in-contention downlink signals in the first downlink reception and the second downlink reception.

In this implementation, when one or more resource contentions occur between two downlink receptions, the terminal may preferentially receive downlink signals of a downlink reception triggered later, and abandon reception of downlink signals of a downlink reception triggered earlier. Alternatively, the terminal may preferentially receive downlink signals of a downlink reception triggered earlier, and abandon reception of downlink signals of a downlink reception triggered later. The terminal may alternatively determine, based on at least one of types of uplink signals, logical channels which the uplink signals belong to, and service priorities of the uplink signals, downlink signals that it wants to receive or downlink signals of which it wants to abandon.

In this implementation, the resource contention may be only a time-domain resource contention, or only a frequency-domain resource contention, or a time-frequency resource contention. Resource contention refers to partial or complete overlap of time-frequency resources in which two or more downlink receptions are located.

It should be noted that various optional implementations in this embodiment of the present invention may be implemented in combination or may be implemented independently. This is not limited in this embodiment of the present invention.

To better understand the technical solutions in the embodiments of the present invention, three specific embodiments are provided below.

### Embodiment 1

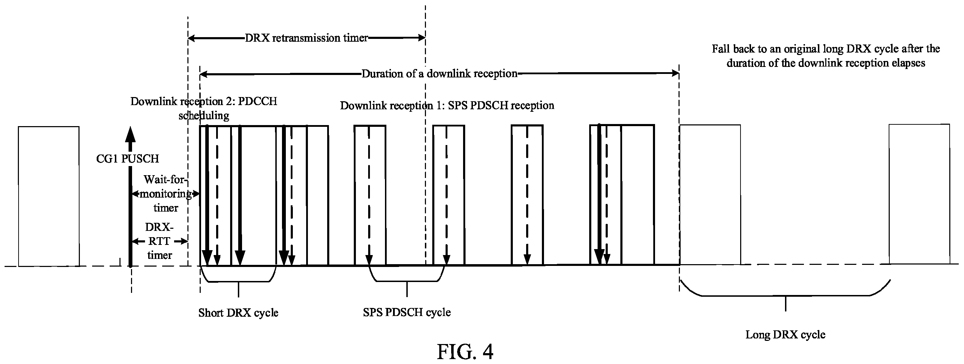

As shown in FIG. 4 to FIG. 6, in this embodiment, a network-side device configures association relationships between uplink signals and downlink receptions in advance, and a process of triggering a downlink reception by an uplink signal is completed through implicit indication. The mechanism of uplink signal-triggered downlink reception is configured for each logical channel. The uplink signal is triggered by a PUSCH with a configured grant (CG). The time-domain monitoring method for downlink reception adopts the discontinuous reception using short DRX cycle. A network configures a first timer at a start time of a related downlink reception as a wait-for-monitoring timer (timer) and configures a duration of the downlink reception as a length of a delay budget (delay budget). Such wait-for-monitoring timer may be used simultaneously with a retransmission timer configured in DRX, where the retransmission timer is related to a HARQ procedure in DRX. A MAC CE command prescribed by a protocol forcibly stops all ongoing downlink receptions currently triggered by uplink signals.

The network-side device configures the association relationships between uplink signals and downlink receptions in advance. For example, logical channel 1 is mapped to a PUSCH of CG1, and associated with downlink reception 1 and downlink reception 2; and logical channel 2 is mapped to a PUSCH of CG2, and associated with downlink reception 3.

Configuration information corresponding to downlink reception 1 and downlink reception 2 is substantially the same: the downlink receptions have a same time-domain start time and a same monitoring configuration (a short DRX cycle, and a wait-for-monitoring timer and a duration delay budget for downlink reception). The two downlink receptions are of different types: downlink reception 1 is a reception of a semi-persistent SPS PDSCH, and downlink reception 2 has DCI format 1-2 and 0-2 scrambled by a C-RNTI.

A wait-for-monitoring timer is used to determine a time-domain start time of a downlink reception. An onduration timer (valid duration) for downlink reception is set to the delay budget, and the current uplink CG is stopped immediately after expiration of the timer. Wait-for-monitoring timer, duration, and DRX-HARQ-RTT-TimerDL (downlink DRX-HARQ round trip time timer) and DRX-RetransmissionTimerDL (downlink DRX retransmission timer) related to downlink reception in DRX may coexist.

In this embodiment, the terminal has been configured with a long DRX cycle before receiving a downlink reception triggered by an uplink signal.

After transmitting the PUSCH with uplink CG1, the terminal immediately triggers the "wait-for-monitoring timer". After the timer expires, a short DRX cycle is started immediately for performing a downlink scheduling (downlink reception 2) and an SPS downlink data reception (downlink reception 1). In this embodiment, the downlink reception with CG1 uses a configuration related to a short DRX cycle, for example, DRX-ondurationtimer (DRX on duration timer) and DRX-inactivitytimer (DRX inactivity timer).

Configuration information corresponding to downlink reception 3 is periodic CSI-RS, and has a same wait-for-monitoring timer and a duration delay budget for downlink reception as downlink reception 1 and downlink reception 2. In addition, downlink reception is performed within an on duration of each cycle according to a configured monitoring cycle (this cycle is a newly defined cycle configuration, not a DRX cycle): an on duration position and length are indicated by a bitmap in unit of two slots, and as in " 11000", the first 4 slots are in the onduration, and the last 6 slots are off the onduration.

For a case that the terminal is originally configured with a long DRX cycle, and the terminal is to transmit an uplink CG1 PUSCH (data on logical channel 1) and/or CG2 PUSCH (data on logical channel 2) to the network-side device, typical examples of an uplink signal-triggered downlink reception solution are described as follows with reference to the related configuration in this solution.

Example 1: As shown in FIG. 4, only one CG1 PUSCH triggers a downlink reception process, that is, there is one configuration for CG1 PUSCH- triggered downlink reception.

In FIG. 4, dashed line arrows represent downlink reception 1: SPS PDSCH reception; and solid line arrows represent downlink reception 2: PDCCH scheduling.

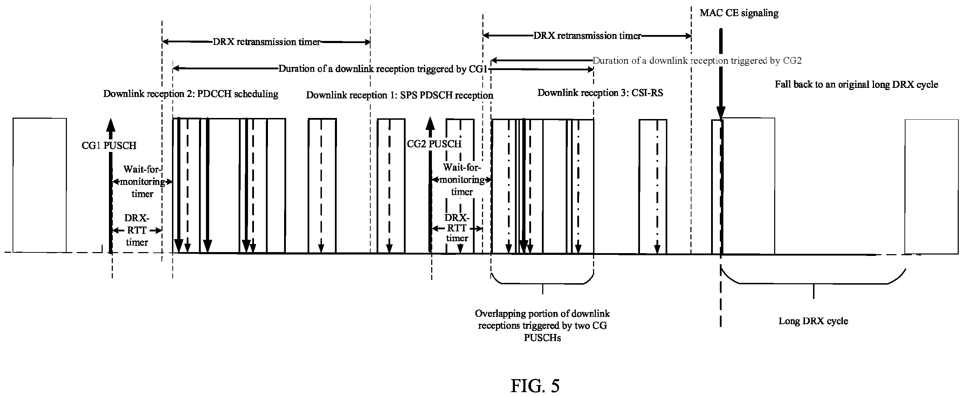

Example 2: As shown in FIG. 5, if another uplink CG2 is transmitted within the duration of the downlink reception triggered by the uplink CG1 (that is, before the current downlink reception ends), monitoring configurations for downlink receptions triggered by a plurality of uplink signals are used, and the network-side device configures a MAC CE command (MAC CE signaling) to stop the currently ongoing downlink reception. That is, when a plurality of CG PUSCHs overlap, a plurality of downlink reception configurations need to be met, and a MAC CE command is configured.

In FIG. 5, dashed line arrows represent downlink reception 1: SPS PDSCH reception; solid line arrows represent downlink reception 2: PDCCH scheduling; and dashed-dotted arrows represent downlink reception 3: CSI-RS.

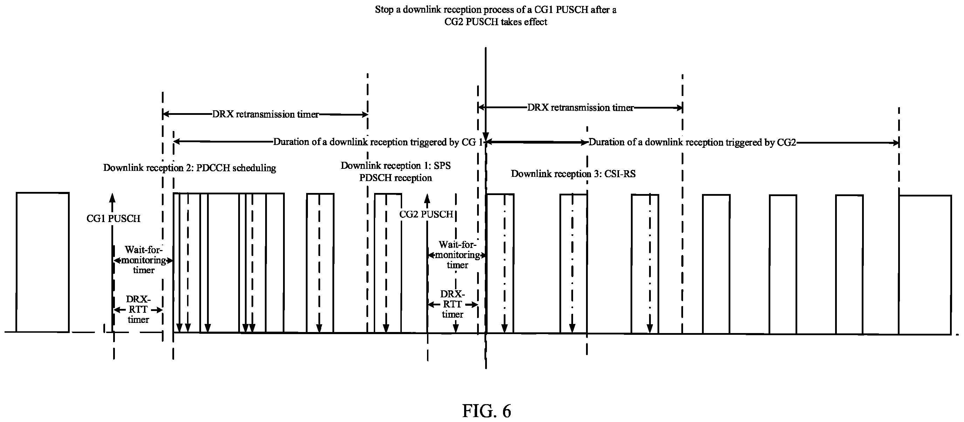

Example 3: As shown in FIG. 6, if another uplink CG2 is transmitted within the duration of the downlink reception triggered by the uplink CG1 signal (that is, before the current downlink reception ends), only a monitoring configuration for a downlink reception triggered by one uplink signal is used, and the network-side device configures no MAC CE command signaling. That is, when a plurality of CG PUSCHs overlap, a previous downlink reception is stopped to start a new downlink reception, and no MAC CE command is configured.

In FIG. 6, dashed line arrows represent downlink reception 1: SPS PDSCH reception; solid line arrows represent downlink reception 2: PDCCH scheduling; and dashed-dotted arrows represent downlink reception 3: CSI-RS.

### Embodiment 2

This embodiment focuses on association relationships between uplink signals and downlink receptions and an explicit indication method.

In this embodiment, the terminal has not been configured with a DRX cycle before receiving a downlink reception triggered by an uplink signal. The terminal transmits a MAC CE to the network-side device, and the MAC CE carries an ID of a downlink reception to be activated.

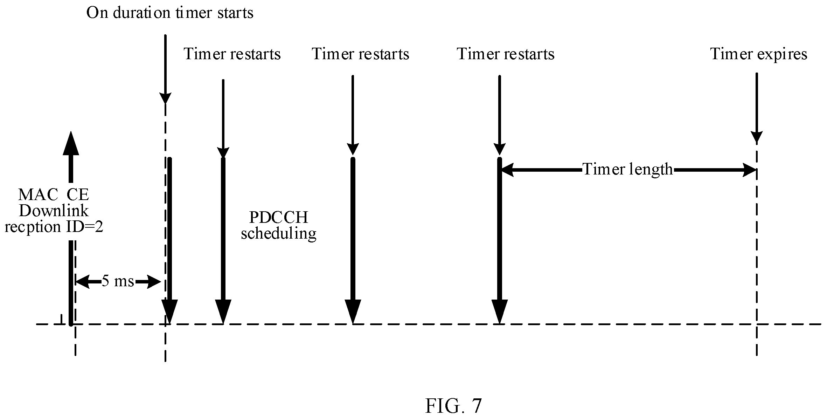

Example 1: As shown in FIG. 7, 5 downlink receptions are configured by using RRC, and the 5 uplink receptions are numbered. The terminal transmits an uplink control signaling MAC CE to explicitly activate one of the downlink receptions: downlink reception 2.

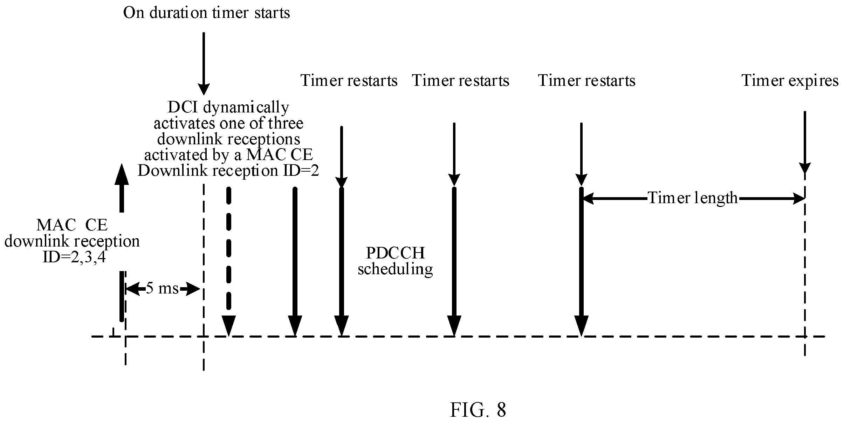

Example 2: As shown in FIG. 8, 5 downlink receptions are configured by using RRC, and the 5 uplink receptions are numbered. The terminal transmits an uplink control signaling MAC CE to explicitly activate three of the downlink receptions: downlink receptions 2, 3, and 4. After the downlink reception is started, DCI is used to dynamically indicate activation of one of the three downlink receptions: downlink reception 2.

Configuration information for downlink reception 2 is: a group common PDCCH (group common PDCCH) scrambled by C-RNTI, which is downlink reception type, and a set of wait-for-monitoring N and on duration timer (timer) for downlink reception. After transmitting an uplink SR, the terminal starts an on duration timer after N symbols (symbols) or N ms or N slots, and starts to receive downlink scheduling. If N is measured by symbol or slot, a value of N is related to an SCS configuration. In this example, N is set to 5 ms. After receiving the downlink scheduling PDCCH within a duration of the duration timer, the timer is restarted, and this downlink reception is stopped after the timer expires.

### Embodiment 3

This embodiment focuses on a method for triggering a downlink reception by an uplink signal: triggering and separately configuring a downlink reception by using uplink signaling UCI, where the mechanism of triggering downlink reception by uplink signal is configured for a specified BWP1.

In this embodiment, the terminal has been configured with a DRX cycle before receiving a downlink reception triggered by an uplink signal. The terminal transmits the uplink signaling UCI on BWP1, and explicitly carries in the UCI configuration information for the downlink reception triggered by the UCI: a time-domain start time of the downlink reception, a monitoring configuration for the downlink reception, a duration of the downlink reception, and a type of the downlink reception.

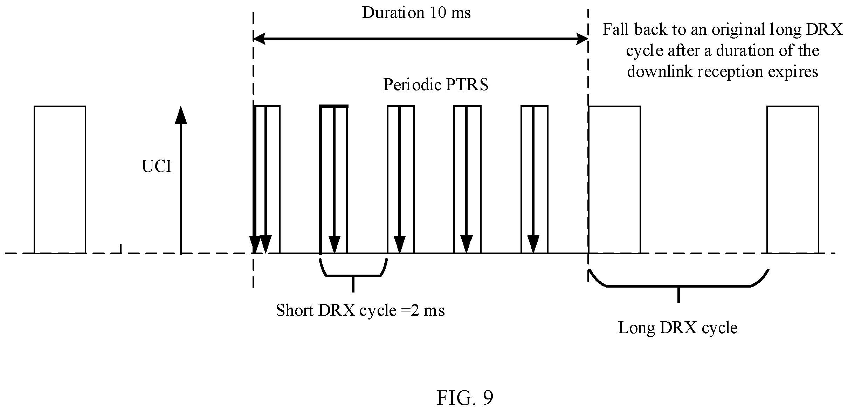

As shown in FIG. 9, the time-domain start time of the downlink reception is: the first DL slot containing CORESET after the UCI. The monitoring configuration for the downlink reception is: short DRX cycle, with a magnitude of 2 ms and an offset of 0. The type of the downlink reception is periodic PTRS. The duration of the downlink reception is 10 ms.

The foregoing three embodiments are merely example descriptions, and do not limit the embodiments of the present invention.

In the embodiments of the present invention, the terminal may transmit an uplink signal to trigger a corresponding downlink reception, which can not only reduce resource consumption by the terminal, helping the terminal save energy, but also improve flexibility and efficiency of the terminal in downlink reception. The embodiments of the present invention are applicable but not limited to XR application scenarios. When applied to an XR application scenario, the embodiments of the present invention can better meet service requirements of an XR terminal and requirements of an XR user.

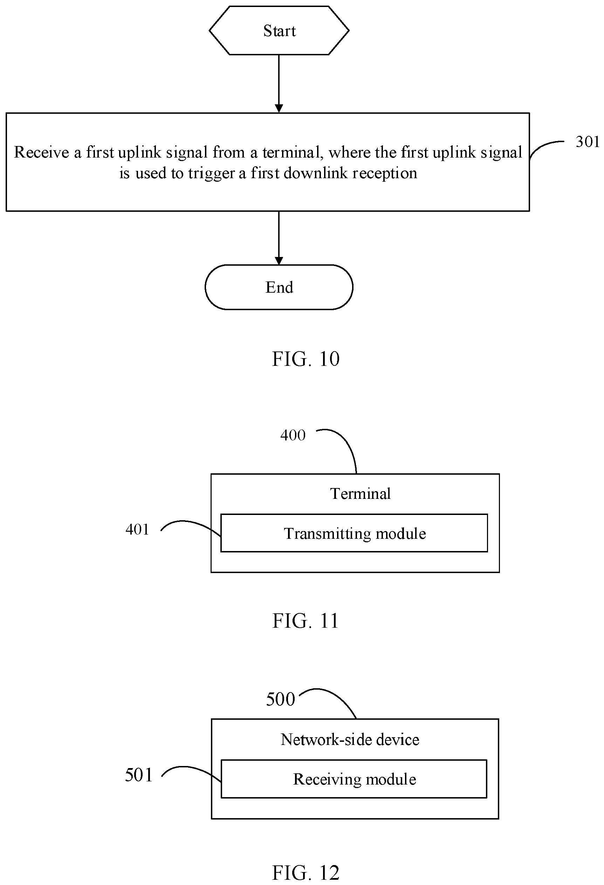

FIG. 10 is a flowchart of a downlink reception triggering method according to an embodiment of the present invention. As shown in FIG. 10, the downlink reception triggering method is applied to a network-side device, and the method includes the following step:
Step 301: Receive a first uplink signal from a terminal, where the first uplink signal is used to trigger a first downlink reception.

Optionally, there is a time-domain association relationship between the first uplink signal and the first downlink reception.

Optionally, the association relationship is configured by the network-side device or prescribed by a protocol.

Optionally, the first uplink signal includes first indication information, the first indication information is used to trigger M first downlink receptions among N downlink receptions, the N downlink receptions are configured by the network-side device or prescribed by a protocol, and both N and M are integers greater than or equal to 1.

Optionally, the first indication information includes at least one of an identifier of the first downlink reception and a time-domain configuration parameter of the first downlink reception.

Optionally, the time-domain configuration parameter of the first downlink reception is configured by the network-side device or prescribed by a protocol.

Optionally, the time-domain configuration parameter of the first downlink reception includes at least one of the following:
time-domain start time of the first downlink reception;
time-domain monitoring method for the first downlink reception;
duration of the first downlink reception; and
first cycle parameter of the first downlink reception, where the first cycle parameter includes at least one of length of a first cycle, on duration length of the first cycle, and start offset of the on duration of the first cycle.

Optionally, the time-domain start time of the first downlink reception is any one of the following:
a reference time, where the reference time is an end time of a time-domain resource carrying the first uplink signal;
a first time, where the first time is a time that is a first time interval apart from the reference time;
a start time of the 1-st available downlink time-domain resource after the reference time;
a start time of a time-domain resource after expiration of a first timer, where the first timer is started at the reference time;
a start time of the 1-st available downlink time-domain resource after the first time; and
a start time of the 1-st available downlink time-domain resource after expiration of the first timer.

Optionally, the duration of the first downlink reception includes any one of a first time length and a time length of a second timer.

Optionally, the time-domain monitoring method for the first downlink reception includes at least one of the following:
monitoring the first downlink reception within the duration of the first downlink reception;
monitoring the first downlink reception within an on duration of each first cycle; and
monitoring the first downlink reception within an on duration of each first cycle in the duration of the first downlink reception.

Optionally, the on duration length of the first cycle is indicated by a bitmap.

Optionally, if the first downlink reception includes reception of a physical downlink control channel PDCCH, the time-domain configuration parameter of the first downlink reception includes at least one of the following:
PDCCH blind detection parameter;
PDCCH monitoring periodicity;
PDCCH monitoring offset;
PDCCH monitoring duration;
control resource set CORESET;
search space group;
search space;
DCI format;
radio network temporary identifier RNTI;
time interval between a PDCCH and a physical downlink shared channel PDSCH scheduled by the PDCCH;
time interval between a PDSCH and a HARQ-ACK feedback for the PDSCH;
time interval between a PDCCH and a physical uplink shared channel PUSCH scheduled by the PDCCH;
PDSCH processing delay; and
PUSCH preparation delay.

Optionally, the association relationship is configured for at least one of a specified terminal, a specified medium access control MAC entity, a specified service type, and a specified frequency range.

Optionally, a type of the first uplink signal includes at least one of an uplink channel type and a type of signal carried on uplink channel.

Optionally, the first downlink reception includes at least one of downlink scheduling information reception, downlink signal reception, downlink data information reception, and downlink channel monitoring.

Optionally, the method further includes:
transmitting a first message to the terminal, where the first message is used to instruct the terminal to stop receiving at least one downlink reception in the first downlink reception.

Optionally, the method further includes:
transmitting a second message to the terminal, where the second message is used to instruct the terminal to switch a receiving cycle for the first downlink reception from a first cycle to a second cycle; and the second cycle is different from the first cycle in at least one of length, on duration length, and start offset of the on duration.

Optionally, the first downlink reception includes a plurality of downlink receptions, and each downlink reception corresponds to one downlink reception type.

It should be noted that for specific implementation of this embodiment of the present invention as an embodiment of the network-side device corresponding to the foregoing embodiment, reference may be made to the relevant descriptions of the foregoing embodiment, and the same beneficial effects can be achieved. To avoid repetition, details are not described herein again.

FIG. 11 is a structural diagram of a terminal according to an embodiment of the present invention. As shown in FIG. 11, the terminal 400 includes:
a transmitting module 401, configured to transmit a first uplink signal, where the first uplink signal is used to trigger a first downlink reception.

Optionally, there is a time-domain association relationship between the first uplink signal and the first downlink reception.

Optionally, the association relationship is configured by a network-side device or prescribed by a protocol.

Optionally, the terminal 400 further includes:
a first triggering module, configured to trigger, based on at least one of a type of the first uplink signal, a logical channel which the first uplink signal belongs to, and a service priority of the first uplink signal, the first downlink reception associated with the first uplink signal.

Optionally, the first uplink signal includes first indication information, the first indication information is used to trigger M first downlink receptions among N downlink receptions, the N downlink receptions are configured by the network-side device or prescribed by a protocol, and both N and M are integers greater than or equal to 1.

Optionally, if M is greater than 1, the terminal 400 further includes:
a first receiving module, configured to receive first downlink control information DCI after the first uplink signal is transmitted; and
a second triggering module, configured to trigger K first downlink receptions among the M first downlink receptions by using the first DCI, where K is an integer greater than or equal to 1.

Optionally, the first indication information includes at least one of an identifier of the first downlink reception and a time-domain configuration parameter of the first downlink reception.

Optionally, the time-domain configuration parameter of the first downlink reception is configured by a network-side device or prescribed by a protocol.

Optionally, the time-domain configuration parameter of the first downlink reception includes at least one of the following:
time-domain start time of the first downlink reception;
time-domain monitoring method for the first downlink reception;
duration of the first downlink reception; and
first cycle parameter of the first downlink reception, where the first cycle parameter includes at least one of length of a first cycle, on duration length of the first cycle, and start offset of the on duration of the first cycle.

Optionally, the time-domain start time of the first downlink reception is any one of the following:
a reference time, where the reference time is an end time of a time-domain resource carrying the first uplink signal;
a first time, where the first time is a time that is a first time interval apart from the reference time;
a start time of the 1-st available downlink time-domain resource after the reference time;
a start time of a time-domain resource after expiration of a first timer, where the first timer is started at the reference time;
a start time of the 1-st available downlink time-domain resource after the first time; and
a start time of the 1-st available downlink time-domain resource after expiration of the first timer.

Optionally, the duration of the first downlink reception includes any one of a first time length and a time length of a second timer.

Optionally, the time-domain monitoring method for the first downlink reception includes at least one of the following:
monitoring the first downlink reception within the duration of the first downlink reception;
monitoring the first downlink reception within an on duration of each first cycle; and
monitoring the first downlink reception within an on duration of each first cycle in the duration of the first downlink reception.

Optionally, the terminal 400 further includes:
a stopping monitoring module, configured to stop monitoring the first downlink reception if Q downlink receptions in the first downlink reception are not received within on durations of L consecutive first cycles, where 1≤Q≤L, and both L and Q are integers greater than or equal to 1.

Optionally, the on duration length of the first cycle is indicated by a bitmap.

Optionally, if the first downlink reception includes reception of a physical downlink control channel PDCCH, the time-domain configuration parameter of the first downlink reception includes at least one of the following:
PDCCH blind detection parameter;
PDCCH monitoring periodicity;
PDCCH monitoring offset;
PDCCH monitoring duration;
control resource set CORESET;
search space group;
search space;
DCI format;
radio network temporary identifier RNTI;
time interval between a PDCCH and a physical downlink shared channel PDSCH scheduled by the PDCCH;
time interval between a PDSCH and a HARQ-ACK feedback for the PDSCH;
time interval between a PDCCH and a physical uplink shared channel PUSCH scheduled by the PDCCH;
PDSCH processing delay; and
PUSCH preparation delay.

Optionally, the association relationship is configured for at least one of a specified terminal, a specified medium access control MAC entity, a specified service type, and a specified frequency range.

Optionally, the first downlink reception includes at least one of downlink scheduling information reception, downlink signal reception, downlink data information reception, and downlink channel monitoring.

Optionally, the type of the first downlink reception includes at least one of downlink scheduling information, downlink signal, downlink data transmission information, and downlink channel monitoring.

Optionally, the terminal 400 further includes:
a second receiving module, configured to receive a first message from a network-side device, where the first message is used to instruct the terminal to stop receiving at least one downlink reception in the first downlink reception.

Optionally, the terminal 400 further includes:
a third receiving module, configured to receive a second message from the network-side device, wherein the second message is used to instruct the terminal to switch a receiving cycle for the first downlink reception from the first cycle to a second cycle; and the second cycle is different from the first cycle in at least one of length, on duration length, and start offset of the on duration.

Optionally, if the terminal has transmitted a second uplink signal within the duration of the first downlink reception and the second uplink signal is used to trigger a second downlink reception, the terminal 400 further includes:
a first downlink reception module, configured to perform the first downlink reception and the second downlink reception in parallel; or
a second downlink reception module, configured to perform only the second downlink reception.

Optionally, in a case of performing the first downlink reception and the second downlink reception in parallel, if the first downlink reception and the second downlink reception contend on one or more resources, the terminal further includes:
a third downlink reception module, configured to: on a resource under contention, perform the second downlink reception and drop the first downlink reception; or
a fourth downlink reception module, configured to: on a resource under contention, perform the first downlink reception and drop the second downlink reception; or
a determining module, configured to: on a resource under contention, determine, based on at least one of types of the first uplink signal and the second uplink signal, logical channels which the first uplink signal and the second uplink signal belong to, and service priorities of the first uplink signal and the second uplink signal, a to-be-performed downlink reception from the first downlink reception and the second downlink reception.

Optionally, the first downlink reception includes a plurality of downlink receptions, and each downlink reception corresponds to one downlink reception type.

It should be noted that the terminal 400 in this embodiment of the present invention may be the terminal in any implementation of the method embodiments. Any implementation of the terminal in the method embodiments can be implemented by the terminal 400 in this embodiment of the present invention, with the same beneficial effects achieved. To avoid repetition, details are not described herein again.

FIG. 12 is a structural diagram of a network-side device according to an embodiment of the present invention. As shown in FIG. 12, the network-side device 500 includes:
a receiving module 501, configured to receive a first uplink signal from a terminal, where the first uplink signal is used to trigger a first downlink reception.

Optionally, there is a time-domain association relationship between the first uplink signal and the first downlink reception.

Optionally, the association relationship is configured by the network-side device or prescribed by a protocol.

Optionally, the first uplink signal includes first indication information, the first indication information is used to trigger M first downlink receptions among N downlink receptions, the N downlink receptions are configured by the network-side device or prescribed by a protocol, and both N and M are integers greater than or equal to 1.

Optionally, the first indication information includes at least one of an identifier of the first downlink reception and a time-domain configuration parameter of the first downlink reception.

Optionally, the time-domain configuration parameter of the first downlink reception is configured by the network-side device or prescribed by a protocol.

Optionally, the time-domain configuration parameter of the first downlink reception includes at least one of the following:
time-domain start time of the first downlink reception;
time-domain monitoring method for the first downlink reception;
duration of the first downlink reception; and
first cycle parameter of the first downlink reception, where the first cycle parameter includes at least one of length of a first cycle, on duration length of the first cycle, and start offset of the on duration of the first cycle.

Optionally, the time-domain start time of the first downlink reception is any one of the following:
a reference time, where the reference time is an end time of a time-domain resource carrying the first uplink signal;
a first time, where the first time is a time that is a first time interval apart from the reference time;
a start time of the 1-st available downlink time-domain resource after the reference time;
a start time of a time-domain resource after expiration of a first timer, where the first timer is started at the reference time;
a start time of the 1-st available downlink time-domain resource after the first time; and
a start time of the 1-st available downlink time-domain resource after expiration of the first timer.

Optionally, the duration of the first downlink reception includes any one of a first time length and a time length of a second timer.

Optionally, the time-domain monitoring method for the first downlink reception includes at least one of the following:
monitoring the first downlink reception within the duration of the first downlink reception;
monitoring the first downlink reception within an on duration of each first cycle; and
monitoring the first downlink reception within an on duration of each first cycle in the duration of the first downlink reception.

Optionally, the on duration length of the first cycle is indicated by a bitmap.

Optionally, if the first downlink reception includes reception of a physical downlink control channel PDCCH, the time-domain configuration parameter of the first downlink reception includes at least one of the following:
PDCCH blind detection parameter;
PDCCH monitoring periodicity;
PDCCH monitoring offset;
PDCCH monitoring duration;
control resource set CORESET;
search space group;
search space;
DCI format;
radio network temporary identifier RNTI;
time interval between a PDCCH and a physical downlink shared channel PDSCH scheduled by the PDCCH;
time interval between a PDSCH and a HARQ-ACK feedback for the PDSCH;
time interval between a PDCCH and a physical uplink shared channel PUSCH scheduled by the PDCCH;
PDSCH processing delay; and
PUSCH preparation delay.

Optionally, the association relationship is configured for at least one of a specified terminal, a specified medium access control MAC entity, a specified service type, and a specified frequency range.

Optionally, a type of the first uplink signal includes at least one of an uplink channel type and a type of signal carried on uplink channel.

Optionally, the first downlink reception includes at least one of downlink scheduling information reception, downlink signal reception, downlink data information reception, and downlink channel monitoring.

Optionally, the network-side device 500 further includes:
a first transmitting module, configured to transmit a first message to the terminal, where the first message is used to instruct the terminal to stop receiving at least one downlink reception in the first downlink reception.

Optionally, the network-side device 500 further includes:
a second transmitting module, configured to transmit a second message to the terminal, where the second message is used to instruct the terminal to switch a receiving cycle for the first downlink reception from a first cycle to a second cycle; and the second cycle is different from the first cycle in at least one of length, on duration length, and start offset of the on duration.

Optionally, the first downlink reception includes a plurality of downlink receptions, and each downlink reception corresponds to one downlink reception type.

It should be noted that the network-side device 500 in this embodiment of the present invention may be the network-side device in any implementation of the method embodiments. Any implementation of the network-side device in the method embodiments can be implemented by the network-side device 500 in this embodiment of the present invention, with the same beneficial effects achieved. To avoid repetition, details are not described herein again.

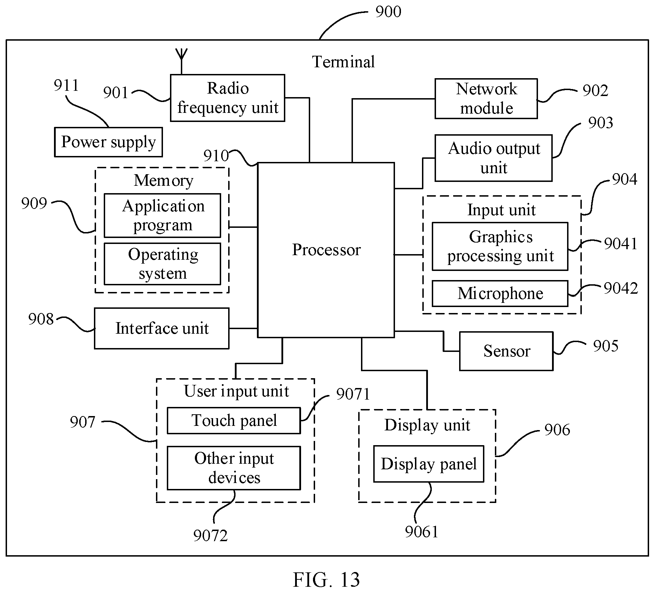

FIG. 13 is a schematic diagram of a hardware structure of a terminal for implementing the embodiments of the present invention. The terminal 900 includes but is not limited to components such as a radio frequency unit 901, a network module 902, an audio output unit 903, an input unit 904, a sensor 905, a display unit 906, a user input unit 907, an interface unit 908, a memory 909, a processor 910, and a power supply 911. A person skilled in the art can understand that the structure of the terminal shown in FIG. 13 does not constitute any limitation on the terminal, and the terminal may include more or fewer components than shown in the figure, or some components may be combined, or the components may be arranged in different manners. In this embodiment of the present invention, the terminal includes but is not limited to a mobile phone, a tablet computer, a notebook computer, a palmtop computer, a vehicle-mounted terminal, a wearable device, and a pedometer.

The radio frequency unit 901 is configured to:
transmit a first uplink signal, where the first uplink signal is used to trigger a first downlink reception.

Optionally, there is a time-domain association relationship between the first uplink signal and the first downlink reception.

Optionally, the association relationship is configured by a network-side device or prescribed by a protocol.

Optionally, the radio frequency unit 901 or the processor 910 is further configured to:
trigger, based on at least one of a type of the first uplink signal, a logical channel which the first uplink signal belongs to, and a service priority of the first uplink signal, the first downlink reception associated with the first uplink signal.

Optionally, the first uplink signal includes first indication information, the first indication information is used to trigger M first downlink receptions among N downlink receptions, the N downlink receptions are configured by the network-side device or prescribed by a protocol, and both N and M are integers greater than or equal to 1.

Optionally, if M is greater than 1, the radio frequency unit 901 is further configured to:
receive first downlink control information DCI after the first uplink signal is transmitted.

The radio frequency unit 901 or the processor 910 is further configured to:
trigger K first downlink receptions among the M first downlink receptions by using the first DCI, wherein K is an integer greater than or equal to 1.

Optionally, the first indication information includes at least one of an identifier of the first downlink reception and a time-domain configuration parameter of the first downlink reception.

Optionally, the time-domain configuration parameter of the first downlink reception is configured by the network-side device or prescribed by a protocol.

Optionally, the time-domain configuration parameter of the first downlink reception includes at least one of the following:
time-domain start time of the first downlink reception;
time-domain monitoring method for the first downlink reception;
duration of the first downlink reception; and
first cycle parameter of the first downlink reception, where the first cycle parameter includes at least one of length of a first cycle, on duration length of the first cycle, and start offset of the on duration of the first cycle.

Optionally, the time-domain start time of the first downlink reception is any one of the following:
a reference time, where the reference time is an end time of a time-domain resource carrying the first uplink signal;
a first time, where the first time is a time that is a first time interval apart from the reference time;
a start time of the 1-st available downlink time-domain resource after the reference time;
a start time of a time-domain resource after expiration of a first timer, where the first timer is started at the reference time;
a start time of the 1-st available downlink time-domain resource after the first time; and
a start time of the 1-st available downlink time-domain resource after expiration of the first timer.

Optionally, the duration of the first downlink reception includes any one of a first time length and a time length of a second timer.

Optionally, the time-domain monitoring method for the first downlink reception includes at least one of the following:
monitoring the first downlink reception within the duration of the first downlink reception;
monitoring the first downlink reception within an on duration of each first cycle; and
monitoring the first downlink reception within an on duration of each first cycle in the duration of the first downlink reception.

Optionally, the radio frequency unit 901 or the processor 910 is further configured to:
stop monitoring the first downlink reception if Q downlink receptions in the first downlink reception are not received within on durations of L consecutive first cycles, where 1≤Q≤L, and both L and Q are integers greater than or equal to 1.

Optionally, the on duration length of the first cycle is indicated by a bitmap.

Optionally, if the first downlink reception includes reception of a physical downlink control channel PDCCH, the time-domain configuration parameter of the first downlink reception includes at least one of the following:
PDCCH blind detection parameter;
PDCCH monitoring periodicity;
PDCCH monitoring offset;
PDCCH monitoring duration;
control resource set CORESET;
search space group;
search space;
DCI format;
radio network temporary identifier RNTI;
time interval between a PDCCH and a physical downlink shared channel PDSCH scheduled by the PDCCH;
time interval between a PDSCH and a HARQ-ACK feedback for the PDSCH;
time interval between a PDCCH and a physical uplink shared channel PUSCH scheduled by the PDCCH;
PDSCH processing delay; and
PUSCH preparation delay.

Optionally, the association relationship is configured for at least one of a specified terminal, a specified medium access control MAC entity, a specified service type, and a specified frequency range.

Optionally, a type of the first uplink signal includes at least one of an uplink channel type and a type of signal carried on uplink channel.

Optionally, the first downlink reception includes at least one of downlink scheduling information reception, downlink signal reception, downlink data information reception, and downlink channel monitoring.

Optionally, the radio frequency unit 901 is further configured to:
receive a first message from a network-side device, where the first message is used to instruct the terminal to stop receiving at least one downlink reception in the first downlink reception.

Optionally, the radio frequency unit 901 is further configured to:
receive a second message from the network-side device, where the second message is used to instruct the terminal to switch a receiving cycle for the first downlink reception from the first cycle to a second cycle; and the second cycle is different from the first cycle in at least one of length, on duration length, and start offset of the on duration.

Optionally, if the terminal has transmitted a second uplink signal within the duration of the first downlink reception and the second uplink signal is used to trigger a second downlink reception, the radio frequency unit 901 or the processor 910 is further configured to:
perform the first downlink reception and the second downlink reception in parallel; or
perform only the second downlink reception.

Optionally, in a case of performing the first downlink reception and the second downlink reception in parallel, if the first downlink reception and the second downlink reception contend on one or more resources, the radio frequency unit 901 or the processor 910 is further configured to:
on a resource under contention, perform the second downlink reception and drop the first downlink reception; or
on a resource under contention, perform the first downlink reception and drop the second downlink reception; or
on a resource under contention, determine, based on at least one of types of the first uplink signal and the second uplink signal, logical channels which the first uplink signal and the second uplink signal belong to, and service priorities of the first uplink signal and the second uplink signal, a to-be-performed downlink reception from the first downlink reception and the second downlink reception.

Optionally, the first downlink reception includes a plurality of downlink receptions, and each downlink reception corresponds to one downlink reception type.

It should be noted that the terminal 900 in this embodiment may be the terminal in any implementation of the method embodiments of the present invention. Any implementation of the terminal in the method embodiments of the present invention can be implemented by the terminal 900 in this embodiment, with the same beneficial effects achieved. Details are not described herein again.

It should be understood that in this embodiment of the present invention, the radio frequency unit 901 may be configured to receive and transmit signals in an information reception or transmission or call process. Specifically, after receiving downlink data from a base station, the radio frequency unit 901 transmits the downlink data to the processor 910 for processing, and in addition, transmits uplink data to the base station. Generally, the radio frequency unit 901 includes but is not limited to an antenna, at least one amplifier, a transceiver, a coupler, a low noise amplifier, and a duplexer. In addition, the radio frequency unit 901 may further communicate with a network and another device by using a wireless communications system.

The terminal provides a user with wireless broadband Internet access through the network module 902, for example, helping the user to send or receive an email, to browse a web page, or to access streaming media.

The audio output unit 903 may convert audio data received by the radio frequency unit 901 or the network module 902 or stored in the memory 909 into an audio signal and output the audio signal as a sound. In addition, the audio output unit 903 may further provide audio output (for example, a call signal reception tone or a message reception tone) that is related to a specific function performed by the terminal 900. The audio output unit 903 includes a speaker, a buzzer, a receiver, and the like.

The input unit 904 is configured to receive an audio signal or a video signal. The input unit 904 may include a graphics processing unit (Graphics Processing Unit, GPU) 9041 and a microphone 9042. The graphics processing unit 9041 processes image data of a static picture or a video obtained by an image capture apparatus (for example, a camera) in an image capture mode or a video capture mode. A processed image frame may be displayed on the display unit 906. The image frame processed by the graphics processing unit 9041 may be stored in the memory 909 (or another storage medium) or transmitted by using the radio frequency unit 901 or the network module 902. The microphone 9042 can receive sounds and process such sounds into audio data. The processed audio data can be converted into a format that can be transmitted to a mobile communication base station through the radio frequency unit 901 in a telephone call mode, and output as such.

The terminal 900 further includes at least one sensor 905, for example, an optical sensor, a motion sensor, and other sensors. Specifically, the optical sensor includes an ambient light sensor and a proximity sensor. The ambient light sensor may adjust luminance of a display panel 9061 based on brightness of ambient light, and the proximity sensor may turn off the display panel 9061 and backlight when the terminal 900 moves to an ear. As a motion sensor, an accelerometer sensor may detect magnitudes of accelerations in various directions (there are usually three axes), may detect a magnitude and a direction of gravity when in a static state, and may be configured to recognize a posture of the terminal (for example, landscape/portrait mode switching, a related game, or magnetometer posture calibration), provide a function related to vibration recognition (for example, a pedometer or a tap), or the like. The sensor 905 may further include a fingerprint sensor, a pressure sensor, an iris sensor, a molecular sensor, a gyroscope, a barometer, a hygrometer, a thermometer, or an infrared sensor. Details are not described herein.

The display unit 906 is configured to display information input by the user or information provided to the user. The display unit 906 may include the display panel 9061. The display panel 9061 may be configured in a form of a liquid crystal display (Liquid Crystal Display, LCD), an organic light-emitting diode (Organic Light-Emitting Diode, OLED), or the like.

The user input unit 907 may be configured to receive input digit or character information, and generate key signal input associated with user settings and function control of the terminal. Specifically, the user input unit 907 includes a touch panel 9071 and other input devices 9072. The touch panel 9071 is also referred to as a touchscreen, and may collect a touch operation of the user on or near the touch panel (for example, an operation performed on or near the touch panel 9071 by the user by using any appropriate object or accessory such as a finger or a stylus). The touch panel 9071 may include two parts: a touch detection apparatus and a touch controller. The touch detection apparatus detects a touch direction of a user, detects a signal brought by a touch operation, and transmits the signal to the touch controller. The touch controller receives touch information from the touch detection apparatus, converts the touch information into touch point coordinates, transmits the touch point coordinates to the processor 910, and receives and executes a command transmitted by the processor 910. In addition, the touch panel 9071 may be implemented in a plurality of forms, for example, as a resistive, capacitive, infrared, or surface acoustic wave touch panel. In addition to the touch panel 9071, the user input unit 907 may further include other input devices 9072. Specifically, the other input devices 9072 may include but are not limited to a physical keyboard, a function button (for example, a volume control button or a power button), a trackball, a mouse, and a joystick. Details are not described herein.

Further, the touch panel 9071 may cover the display panel 9071. After detecting a touch operation on or near the touch panel 9071, the touch panel 9071 transmits the touch operation to the processor 910 to determine a type of a touch event. Then the processor 910 provides corresponding visual output on the display panel 9061 based on the type of the touch event. In FIG. 13, the touch panel 9071 and the display panel 9061 act as two separate components to implement input and output functions of the terminal. However, in some embodiments, the touch panel 9071 and the display panel 9061 may be integrated to implement the input and output functions of the terminal. This is not specifically limited herein.

The interface unit 908 is an interface between an external apparatus and the terminal 900. For example, the external apparatus may include a wired or wireless headphone port, an external power (or battery charger) port, a wired or wireless data port, a memory card port, a port for connecting an apparatus with an identification module, an audio input/output (I/O) port, a video I/O port, or an earphone port. The interface unit 908 may be configured to receive an input (for example, data information or power) from the external apparatus and transmit the received input to one or more elements within the terminal 900, or may be configured to transmit data between the terminal 900 and the external apparatus.

The memory 909 may be configured to store software programs and various data. The memory 909 may mainly include a program storage area and a data storage area. The program storage area may store an operating system, an application program required by at least one function (for example, an audio play function or an image play function), and the like. The data storage area may store data (for example, audio data and contacts) created based on usage of the mobile phone. In addition, the memory 909 may include a high-speed random access memory, and may further include a nonvolatile memory such as a disk storage device, a flash memory device, or another volatile solid-state storage device.

The processor 910 is a control center of the terminal that connects various parts of the entire terminal by using various interfaces or lines. The processor 910 performs various functions of the terminal and processes data by running or executing software programs and/or modules stored in the memory 909 and calling data stored in the memory 909, so as to perform overall monitoring on the terminal. The processor 910 may include one or more processing units. Preferably, the processor 910 may integrate an application processor and a modem processor. The application processor mainly processes the operating system, a user interface, an application program, and the like. The modem processor mainly processes wireless communication. It may be understood that the modem processor may alternatively not be integrated in the processor 910.

The terminal 900 may further include the power supply 911 (such as a battery) supplying power to each component. Preferably, the power supply 911 may be logically connected to the processor 910 by using a power management system, so that functions such as charge and discharge management and power consumption management are implemented by using the power management system.

In addition, the terminal 900 includes some functional modules that are not shown. Details are not described herein.

Preferably, an embodiment of the present invention further provides a terminal, including a processor 910, a memory 909, and an instruction or program that is stored in the memory 909 and capable of running on the processor 910, where when the instruction or program is executed by the processor 910, the processes of the foregoing embodiments of the downlink reception triggering method are implemented, and the same technical effects can be achieved. To avoid repetition, details are not further described herein.

It should be noted that the terminal 900 in this embodiment may be the terminal in any implementation of the method embodiments of the present invention. Any implementation of the terminal in the method embodiments of the present invention can be implemented by the terminal 900 in this embodiment, with the same beneficial effects achieved. Details are not described herein again.

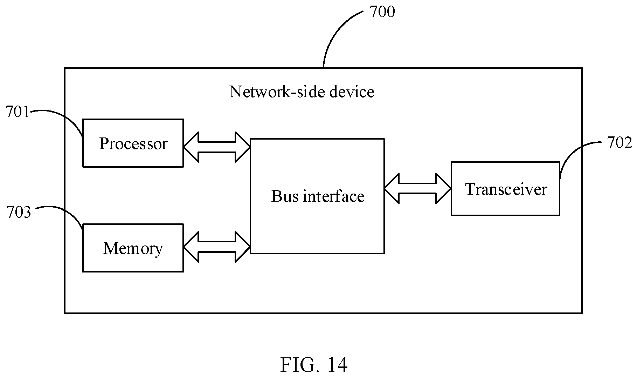

FIG. 14 is a structural diagram of a network-side device according to an embodiment of the present invention. As shown in FIG. 14, the network-side device 700 includes a processor 701, a transceiver 702, a memory 703, and a bus interface.

The transceiver 702 is configured to:
receive a first uplink signal from a terminal, where the first uplink signal is used to trigger a first downlink reception.

Optionally, there is a time-domain association relationship between the first uplink signal and the first downlink reception.

Optionally, the association relationship is configured by the network-side device or prescribed by a protocol.

Optionally, the first uplink signal includes first indication information, the first indication information is used to trigger M first downlink receptions among N downlink receptions, the N downlink receptions are configured by the network-side device or prescribed by a protocol, and both N and M are integers greater than or equal to 1.

Optionally, the first indication information includes at least one of an identifier of the first downlink reception and a time-domain configuration parameter of the first downlink reception.

Optionally, the time-domain configuration parameter of the first downlink reception is configured by the network-side device or prescribed by a protocol.

Optionally, the time-domain configuration parameter of the first downlink reception includes at least one of the following:
time-domain start time of the first downlink reception;
time-domain monitoring method for the first downlink reception;
duration of the first downlink reception; and
first cycle parameter of the first downlink reception, where the first cycle parameter includes at least one of length of a first cycle, on duration length of the first cycle, and start offset of the on duration of the first cycle.

Optionally, the time-domain start time of the first downlink reception is any one of the following:
a reference time, where the reference time is an end time of a time-domain resource carrying the first uplink signal;
a first time, where the first time is a time that is a first time interval apart from the reference time;
a start time of the 1-st available downlink time-domain resource after the reference time;
a start time of a time-domain resource after expiration of a first timer, where the first timer is started at the reference time;
a start time of the 1-st available downlink time-domain resource after the first time; and
a start time of the 1-st available downlink time-domain resource after expiration of the first timer.

Optionally, the duration of the first downlink reception includes any one of a first time length and a time length of a second timer.

Optionally, the time-domain monitoring method for the first downlink reception includes at least one of the following:
monitoring the first downlink reception within the duration of the first downlink reception;
monitoring the first downlink reception within an on duration of each first cycle; and
monitoring the first downlink reception within an on duration of each first cycle in the duration of the first downlink reception.

Optionally, the on duration length of the first cycle is indicated by a bitmap.

Optionally, if the first downlink reception includes reception of a physical downlink control channel PDCCH, the time-domain configuration parameter of the first downlink reception includes at least one of the following:
PDCCH blind detection parameter;
PDCCH monitoring periodicity;
PDCCH monitoring offset;
PDCCH monitoring duration;
control resource set CORESET;
search space group;
search space;
DCI format;
radio network temporary identifier RNTI;
time interval between a PDCCH and a physical downlink shared channel PDSCH scheduled by the PDCCH;
time interval between a PDSCH and a HARQ-ACK feedback for the PDSCH;
time interval between a PDCCH and a physical uplink shared channel PUSCH scheduled by the PDCCH;
PDSCH processing delay; and
PUSCH preparation delay.

Optionally, the association relationship is configured for at least one of a specified terminal, a specified medium access control MAC entity, a specified service type, and a specified frequency range.

Optionally, a type of the first uplink signal includes at least one of an uplink channel type and a type of signal carried on uplink channel.

Optionally, the first downlink reception includes at least one of downlink scheduling information reception, downlink signal reception, downlink data information reception, and downlink channel monitoring.

Optionally, the transceiver 702 is further configured to:
transmit a first message to the terminal, where the first message is used to instruct the terminal to stop receiving at least one downlink reception in the first downlink reception.

Optionally, the transceiver 702 is further configured to:
transmit a second message to the terminal, where the second message is used to instruct the terminal to switch a receiving cycle for the first downlink reception from a first cycle to a second cycle; and the second cycle is different from the first cycle in at least one of length, on duration length, and start offset of the on duration.

Optionally, the first downlink reception includes a plurality of downlink receptions, and each downlink reception corresponds to one downlink reception type.

In FIG. 14, a bus architecture may include any quantity of interconnected buses and bridges, and specifically connect together various circuits of one or more processors represented by the processor 701 and a memory represented by the memory 703. The bus architecture may further interconnect various other circuits such as a peripheral device, a voltage regulator, and a power management circuit. These are all well known in the art, and therefore are not further described in this specification. The bus interface provides interfaces. The transceiver 702 may be a plurality of components, including a transmitter and a receiver, and provides units for communicating with a variety of other apparatuses on a transmission medium.

The processor 701 is responsible for management of the bus architecture and general processing, and the memory 703 may store data used by the processor 701 when an operation is performed.

It should be noted that the network-side device 700 in this embodiment may be the network-side device in any implementation of the method embodiments of the present invention. Any implementation of the network-side device in the method embodiments of the present invention can be implemented by the network-side device 700 in this embodiment, with the same beneficial effects achieved. Details are not described herein again.

An embodiment of the present invention further provides a readable storage medium, where the readable storage medium stores an instruction or program. When the instruction or program is executed by a processor, the processes of the embodiments corresponding to the terminal or the network side in the foregoing embodiments are implemented, with the same technical effects achieved. To avoid repetition, details are not described herein again. For example, the readable storage medium is a read-only memory (Read-Only Memory, ROM for short), a random access memory (Random Access Memory, RAM for short), a magnetic disk, an optical disc, or the like.

An embodiment of the present invention further provides a chip, where the chip includes a processor and a communications interface, the communications interface is coupled to the processor, and the processor is configured to run a program or instruction to implement the processes of the foregoing embodiments of the downlink reception triggering method, with the same technical effects achieved. To avoid repetition, details are not described herein again.

It should be understood that the chip mentioned in the embodiments of the present invention may also be referred to as a system-on-chip, a system chip, a chip system, or the like.

It should be noted that the terms "comprise", "include", or any of their variants in this specification are intended to cover a non-exclusive inclusion, such that a process, method, article, or apparatus that includes a list of elements includes not only those elements but also other elements that are not expressly listed, or further includes elements inherent to such process, method, article, or apparatus. In absence of more constraints, an element preceded by "includes a..." does not preclude existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of the present invention essentially, or the part contributing to the prior art may be implemented in a form of a software product. The software product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in the embodiments of the present invention.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A downlink reception triggering method, applied to a terminal and comprising:
transmitting a first uplink signal, wherein the first uplink signal is used to trigger a first downlink reception.

2. The method according to claim 1, wherein there is a time-domain association relationship between the first uplink signal and the first downlink reception.

3. The method according to claim 2, wherein the association relationship is configured by a network-side device or prescribed by a protocol.

4. The method according to claim 3, further comprising:
triggering, based on at least one of a type of the first uplink signal, a logical channel which the first uplink signal belongs to, and a service priority of the first uplink signal, the first downlink reception associated with the first uplink signal.

5. The method according to claim 1, wherein the first uplink signal comprises a first indication information, the first indication information is used to trigger M first downlink receptions among N downlink receptions, the N downlink receptions are configured by a network-side device or prescribed by a protocol, and both N and M are integers greater than or equal to 1.

6. The method according to claim 5, wherein if M is greater than 1, the method further comprises:
receiving first downlink control information DCI after the first uplink signal is transmitted; and
triggering K first downlink receptions among the M first downlink receptions by using the first DCI, wherein K is an integer greater than or equal to 1.

7. The method according to claim 5, wherein the first indication information comprises at least one of an identifier of the first downlink reception and a time-domain configuration parameter of the first downlink reception.

8. The method according to claim 1, wherein a time-domain configuration parameter of the first downlink reception is configured by a network-side device or prescribed by a protocol.

9. The method according to claim 7 or 8, wherein the time-domain configuration parameter of the first downlink reception comprises at least one of the following:
time-domain start time of the first downlink reception;
time-domain monitoring method for the first downlink reception;
duration of the first downlink reception; and
first cycle parameter of the first downlink reception, wherein the first cycle parameter comprises at least one of length of a first cycle, on duration length of the first cycle, and start offset of the on duration of the first cycle.

10. The method according to claim 9, wherein the time-domain start time of the first downlink reception is any one of the following:
a reference time, wherein the reference time is an end time of a time-domain resource carrying the first uplink signal;
a first time, wherein the first time is a time that is a first time interval apart from the reference time;
a start time of the 1-st available downlink time-domain resource after the reference time;
a start time of a time-domain resource after expiration of a first timer, wherein the first timer is started at the reference time;
a start time of the 1-st available downlink time-domain resource after the first time; and
a start time of the 1-st available downlink time-domain resource after expiration of the first timer.

11. The method according to claim 9, wherein the duration of the first downlink reception comprises any one of a first time length and a time length of the second timer.

12. The method according to claim 9, wherein the time-domain monitoring method for the first downlink reception comprises any one of the following:
monitoring the first downlink reception within the duration of the first downlink reception;
monitoring the first downlink reception within an on duration of each first cycle; and
monitoring the first downlink reception within an on duration of each first cycle in the duration of the first downlink reception.

13. The method according to claim 12, further comprising:
stopping monitoring the first downlink reception if Q downlink receptions in the first downlink reception are not received within on durations of L consecutive first cycles, wherein 1≤Q≤L, and both L and Q are integers greater than or equal to 1.

14. The method according to claim 9, wherein the on duration length of the first cycle is indicated by a bitmap.

15. The method according to claim 7 or 8, wherein if the first downlink reception comprises the reception of physical downlink control channel PDCCH, the time-domain configuration parameter of the first downlink reception comprises at least one of the following:
PDCCH blind decoding parameter;
PDCCH monitoring periodicity;
PDCCH monitoring offset;
PDCCH monitoring duration;
control resource set CORESET;
search space group;
search space;
DCI format;
radio network temporary identifier RNTI;
time interval between a PDCCH and a physical downlink shared channel PDSCH scheduled by the PDCCH;
time interval between a PDSCH and a HARQ-ACK feedback for the PDSCH;
time interval between a PDCCH and a physical uplink shared channel PUSCH scheduled by the PDCCH;
PDSCH processing delay; and
PUSCH preparation delay.

16. The method according to claim 2, wherein the association relationship is configured for at least one of a specified terminal, a specified medium access control MAC entity, a specified service type, and a specified frequency range.

17. The method according to claim 1 or 4, wherein a type of the first uplink signal comprises at least one of an uplink channel type and a type of signal carried on uplink channel.

18. The method according to claim 1, wherein the first downlink reception comprises at least one of downlink scheduling information reception, downlink signal reception, downlink data information reception, and downlink channel monitoring.

19. The method according to claim 1, further comprising:
receiving a first message from a network-side device, wherein the first message is used to indicate the terminal to stop receiving at least one of the downlink reception of the first downlink reception.

20. The method according to claim 9, further comprising:
receiving a second message from the network-side device, wherein the second message is used to indicate the terminal to switch the receiving cycle for the first downlink reception from the first cycle to a second cycle; and the second cycle is different from the first cycle in at least one of length, on duration length, and on duration start offset.

21. The method according to claim 1, wherein if the terminal has transmitted a second uplink signal within a duration of the first downlink reception and the second uplink signal is used to trigger a second downlink reception, the method further comprises:
performing the first downlink reception and the second downlink reception in parallel; or
performing only the second downlink reception.

22. The method according to claim 21, wherein in a case of performing the first downlink reception and the second downlink reception in parallel, if the first downlink reception and the second downlink reception contend on one or more resources, the method further comprises:
on a resource under contention, performing the second downlink reception and dropping the first downlink reception; or
on a resource under contention, performing the first downlink reception and dropping the second downlink reception; or
on a resource under contention, determining, based on at least one of types of the first uplink signal and the second uplink signal, logical channels which the first uplink signal and the second uplink signal belong to, and service priorities of the first uplink signal and the second uplink signal, a to-be-performed downlink reception from the first downlink reception and the second downlink reception.

23. A downlink reception triggering method, applied to a network-side device and comprising:
receiving a first uplink signal from a terminal, wherein the first uplink signal is used to trigger a first downlink reception.

24. The method according to claim 23, wherein there is a time-domain association relationship between the first uplink signal and the first downlink reception.

25. The method according to claim 24, wherein the association relationship is configured by a network-side device or prescribed by a protocol.

26. The method according to claim 23, wherein the first uplink signal comprises first indication information, the first indication information is used to trigger M first downlink receptions among N downlink receptions, the N downlink receptions are configured by the network-side device or prescribed by a protocol, and both N and M are integers greater than or equal to 1.

27. The method according to claim 23, further comprising:
transmitting a first message to the terminal, wherein the first message is used to instruct the terminal to stop receiving at least one downlink reception in the first downlink reception.

28. The method according to claim 23, further comprising:
transmitting a second message to the terminal, wherein the second message is used to instruct the terminal to switch a receiving cycle for the first downlink reception from a first cycle to a second cycle; and the second cycle is different from the first cycle in at least one of length, on duration length, and on duration start offset.

29. A terminal, comprising:
a transmitting module, configured to transmit a first uplink signal, wherein the first uplink signal is used to trigger a first downlink reception.

30. The terminal according to claim 29, wherein there is a time-domain association relationship between the first uplink signal and the first downlink reception.

31. The terminal according to claim 30, wherein the association relationship is configured by a network-side device or prescribed by a protocol.

32. The terminal according to claim 29, wherein the first uplink signal comprises first indication information, the first indication information is used to trigger M first downlink receptions among N downlink receptions, the N downlink receptions are configured by a network-side device or prescribed by a protocol, and both N and M are integers greater than or equal to 1.

33. A network-side device, comprising:
a receiving module, configured to receive a first uplink signal from a terminal, wherein the first uplink signal is used to trigger a first downlink reception.

34. The network-side device according to claim 33, wherein there is a time-domain association relationship between the first uplink signal and the first downlink reception.

35. The network-side device according to claim 34, wherein the association relationship is configured by the network-side device or prescribed by a protocol.

36. The network-side device according to claim 33, wherein the first uplink signal comprises first indication information, the first indication information is used to trigger M first downlink receptions among N downlink receptions, the N downlink receptions are configured by the network-side device or prescribed by a protocol, and both N and M are integers greater than or equal to 1.

37. A terminal, comprising a memory, a processor, and an instruction or program stored in the memory and capable of running on the processor, wherein when the instruction or program is executed by the processor, the steps of the downlink reception triggering method according to any one of claims 1 to 22 are implemented.

38. A network-side device, comprising a memory, a processor, and an instruction or program stored in the memory and capable of running on the processor, wherein when the instruction or program is executed by the processor, the steps of the downlink reception triggering method according to any one of claims 23 to 28 are implemented.

39. A readable storage medium, wherein the readable storage medium stores an instruction or program, and when the instruction or program is executed by a processor, the steps of the downlink reception triggering method according to any one of claims 1 to 22 or the steps of the downlink reception triggering method according to any one of claims 23 to 28 are implemented.

40. A chip, comprising a processor and a communications interface, wherein the communications interface is coupled to the processor, and the processor is configured to run a program or instruction to implement the steps of the downlink reception triggering method according to any one of claims 1 to 22, or to implement the steps of the downlink reception triggering method according to any one of claims 23 to 28.

41. A computer program product, stored in a readable storage medium, wherein the computer program product is executed by at least one processor to implement the steps of the downlink reception triggering method according to any one of claims 1 to 22 or the steps of the downlink reception triggering method according to any one of claims 23 to 28.

42. A terminal, wherein the terminal is configured to perform the steps of the downlink reception triggering method according to any one of claims 1 to 22.

43. A network-side device, wherein the network side device is configured to perform the steps of the downlink reception triggering method according to any one of claims 23 to 28.
